Europäisches Patentamt

European Patent Office

Office européen des brevets

(19)

(11) **EP 1 353 467 A1**

(12) **EUROPEAN PATENT APPLICATION**

(43) Date of publication:
**15.10.2003 Bulletin 2003/42**

(51) Int Cl.⁷: $H04L\ 1/00$

(21) Application number: **02290873.5**

(22) Date of filing: **08.04.2002**

(84) Designated Contracting States:
**AT BE CH CY DE DK ES FI FR GB GR IE IT LI LU MC NL PT SE TR**
Designated Extension States:
**AL LT LV MK RO SI**

(71) Applicant: **Mitsubishi Electric Information Technology Centre Europe B.V.**
**1119 NS Schiphol Rijk (NL)**

(72) Inventor: **Fukui, Noriyuki, Mitsubishi Electric ITE**
**35700 Rennes (FR)**

(74) Representative: **Maillet, Alain**
**Cabinet le Guen & Maillet,**
**5, Place Newquay,**
**B.P. 70250**
**35802 Dinard Cedex (FR)**

(54) **Method for recovery of frame delineation in HSDPA**

(57) The invention concerns a transmission method for transmitting sequences of sub-frames assigned to different users over a plurality of channels (HS-SCCHs), each channel being shared among said users, said shared channels being time divided into intervals of transmission (TTIs), a sequence of sub-frames assigned to a user being transmitted on a shared channel in consecutive intervals of transmission. An information indicating the end of a sequence assigned to a user is included in the last sub-frame of said sequence or in a sub-frame appended thereto.

The invention concerns also a method for receiving sequences of sub-frames transmitted by said transmission method.

**Fig. 8**

EP 1 353 467 A1

**EP 1 353 467 A1**

**Description**

The present invention relates to a method for transmitting sequences of sub-frames over a plurality of channels shared among different users. The invention relates also to a method for receiving such sequences of sub-frames. The invention can be applied to a mobile telecommunication system supporting HSDPA.

It has been recently proposed within the framework of the 3GPP forum to enhance the Universal Mobile Telecommunication System (UMTS) with a High Speed Downlink Packet Access (HSDPA). This new fonctionnality is aimed at enabling a fast access to packet services through a new transport channel called HS-DSCH for High Speed-Downlink Shared Channel. The physical channels to which the HS-DSCH is mapped, also called HS-PDSCHs (for High Speed Physical Downlink Shared Channels) can be shared by users in the time domain as well as in the code domain. According to his needs, a user is allocated one or more channelisation codes (or spreading codes) within the HS-DSCH. In addition, the HS-DSCH is expected to accomodate different rates and channel conditions by supporting Adaptive Modulation and Coding schemes (AMC) as well as Hybrid ARQ.

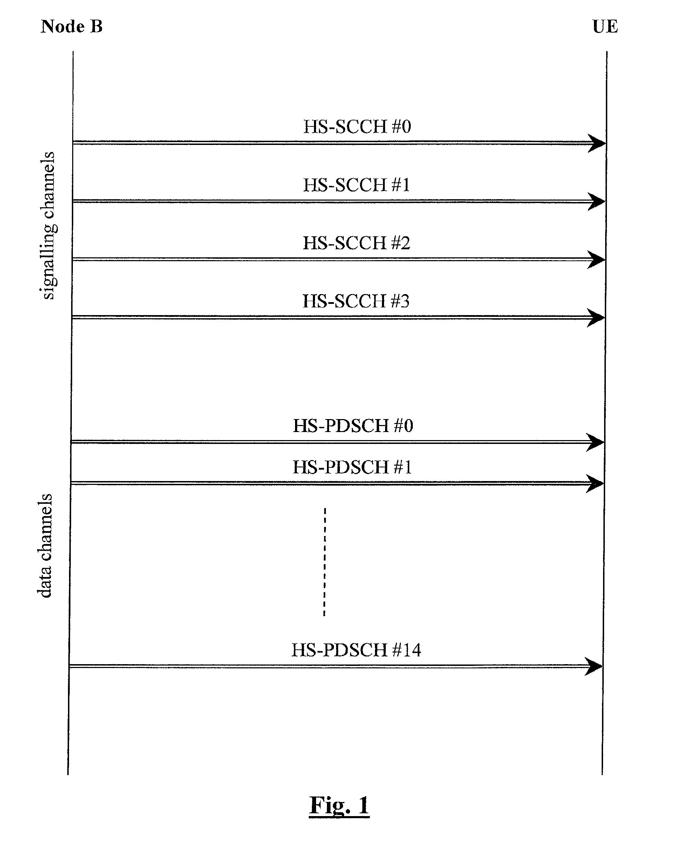

Fig. 1 represents schematically the physical stucture of a high speed downlink shared transport channel for HSDPA. The shared channel basically consists of 15 HS-PDSCH channels which are intended for the transmission of data to the different user equipments (UEs) and of 4 HS-SCCH channels which carry the associated signalling. The data sub-frames for the differents UEs can be code- and time-multiplexed over the HS-PDSCH channels. More specifically, in a given TTI (Transmission Time Interval) the HS-PDSCH channels can simultaneously accomodate one user to fifteen users. A more complete description of the shared channels in HSDPA can be found in the specification 3GPP TR 25.858 available from the website www.3gpp.org.

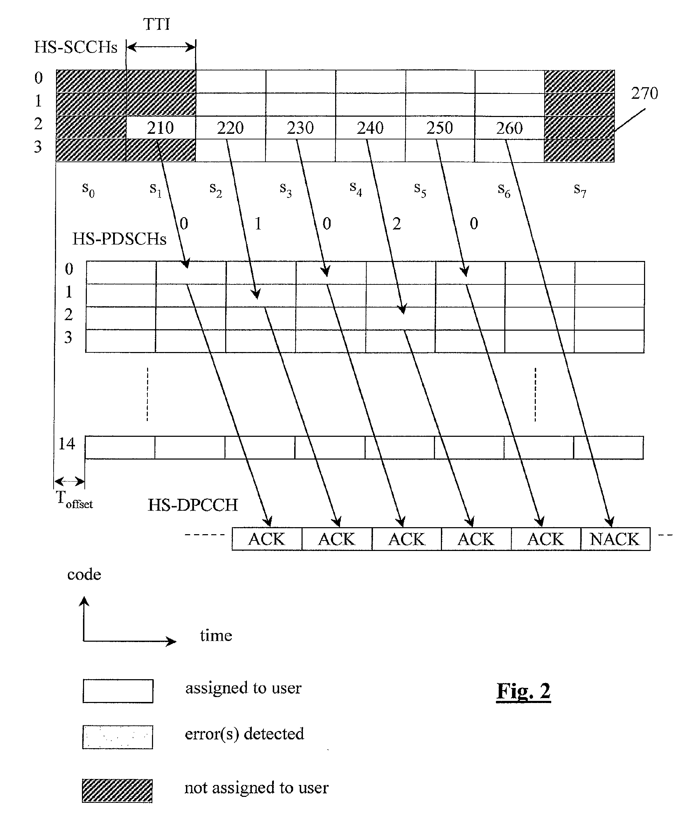

Fig. 2 shows the process of receiving data from the HS-DSCH channel. The HS-SCCH channels numbered 0 to 3 have been represented in the upper part of the figure and the HS-DSCH channels numbered 0 to 14 have been represented below, delayed with a fixed time offset $T_{offset}$. The HS-SCCH channels are subjected to an identical time division: they are divided into TTIs denoted $s_0$, $s_1$,... as represented, each HS-SCCH channel carrying a sub-frame for one user during one TTI (a TTI corresponds to 3 timeslots in FDD). Similarly, the HS-PDSCH channels are subjected to a TTI time division. A sub-frame on a HS-SCCH channel will be referred to as a signalling sub-frame and, similarly, a sub-frame on a HS-PDSCH channel will be referred to a data sub-frame. In a first state, called monitoring state, the UE receives all four HS-SCCH channels (see e.g. TTI $s_0$) since it does not know whether a signalling sub-frame is assigned to the user on one of the HS-SCCH channels. Once the UE has detected a signalling sub-frame assigned to the user on one of the HS-SCCH channels (e.g. in TTI $s_1$ on HS-SCCH #2) it enters a second state, called single channel receiving state, where it stops receiving the other HS-SCCH channels. For example, in TTI $s_2$, the UE keeps receiving HS-SCCH #2 but stops receiving the other channels. The UE then determines the channelization code(s) from the assigned signalling sub-frames i.e it determines over which HS-PDSCH channel(s) the data are transmitted and which transmission parameters are used. For example, the signalling information detected in 210 to 250 and decoded by the UE gives the code numbers 0, 1, 0, 2, 0 respectively. Knowing the transmission parameters, the UE can then obtain the data over HS-PDSCH #0, HS-PDSCH #1, HS-PDSCH #0, HS-PDSCH #2, HS-PDSCH #0, successively. Although in the illustrated case, only one HS-PDSCH channel per sub-frame is allocated , it should be noted that a plurality (up to 15) of such channels can be allocated to a given user.

In the monitoring state, the UE determines whether a signalling sub-frame is assigned to the user by descrambling the sub-frame with its UE ID (UE IDentifier) calculating a CRC as described in more details further below. If an error is detected by the CRC, the UE sends back over the uplink channel HS-DPCCH (High Speed Dedicated Physical Common Channel) a negative acknowledgement NACK, indicating an error. Conversely, if no error is detected by the CRC, the UE checks whether the user data on the allocated HS-PDSCH(s) are erroneous. If they are not, an acknowledgement indication ACK is transmitted over the HS-DPCCH, else a negative acknowledgement NACK is transmitted as mentioned before.

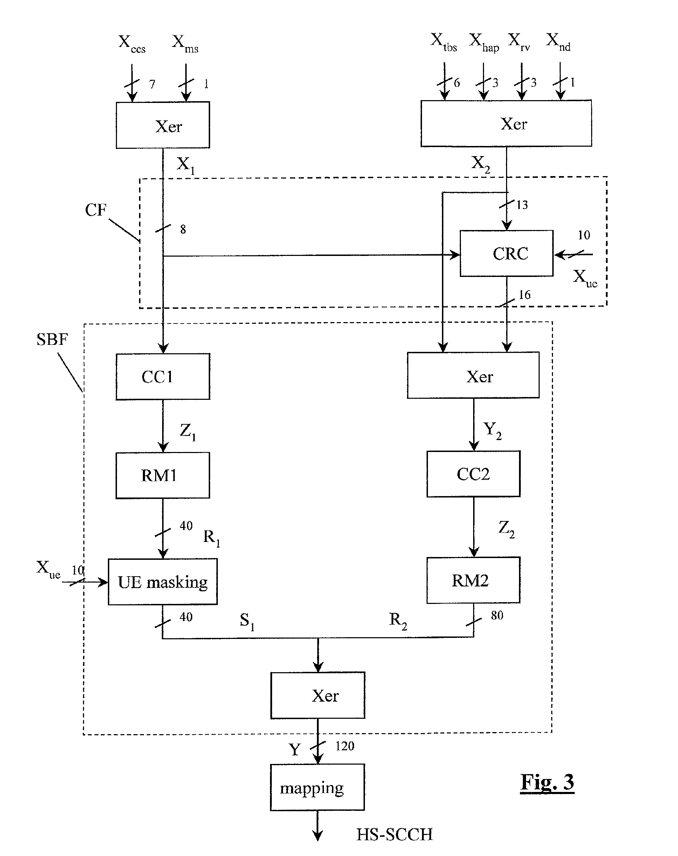

Fig. 3 shows how a signalling sub-frame for a user is generated on a HS-SCCH channel. A signalling sub-frame contains in an encoded form the following information, hereafter referred to as user specific signalling information X, comprising:

$X_{ccs}$ which indicates the channelization code set information i.e. the HS-PDSCH(s) allocation;
$X_{ms}$ which gives the modulation scheme (QPSK or 16-QAM);
$X_{tbs}$ which gives the transport block size;
$X_{hap}$ which indicates the channel process number of Hybrid-ARQ;
$X_{rv}$ which gives the redundancy and constellation version;
$X_{nd}$ indicates whether the current transmission is a first transmission or a retransmission;
$X_{ue}$ represents the UE ID, i.e. identifies the UE .

While $X_{ccs}$ and $X_{ms}$ are multiplexed to give a first composite signalling information $X_1$, and $X_{tbs}$, $X_{hap}$ , $X_{rv}$ and

$X_{nd}$ are multiplexed (or concatenated) to give a second composite signalling information $X_2$. The first composite signalling information $X_1$ is then subjected to a first channel coding $CC_1$ to output a first channel encoded composite information $Z_1$ and then to rate matching in $RM_1$. The rate matched ouptut of $RM_1$, denoted $R_1$, matched to 40 bits, is then masked in a UE specific way by using the UE identifier $X_{ue}$ to produce a UE masked output $S_1$. A CRC code is calculated on the basis of the first composite signalling information $X_1$, the second composite signalling information $X_2$ and the UE identifier $X_{ue}$. The CRC code is then attached to the second composite signalling information and the concatenated result is encoded by a second channel coding $CC_2$ before being subjected to rate matching in $RM_2$, denoted $R_2$, matched to 80 bits. $R_2$ is then multiplexed (or concatenated) with the UE masked output $S_1$ to produce a channel encoded and rate matched signalling information Y over 120 bits which is mapped onto a sub-frame of an HS-SCCH channel.

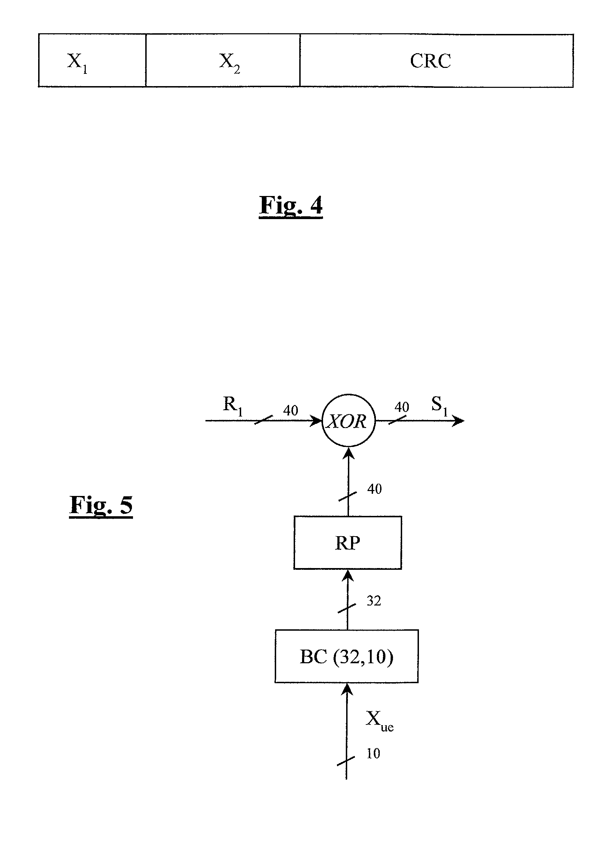

Fig. 4 shows the format of the encoded signalling information at the input of the module denoted SBF, represented with a dotted line in Fig. 3. The module SBF corresponds to channel encoding and rate matching. The encoded signalling information at the input of SBF comprises a first part equal to the first composite signalling information $X_1$, a second part equal to the second composite signalling information $X_2$ and a third part equal to the CRC code obtained from $X_1$, $X_2$ and the UE identifier $X_{ue}$.

Fig. 5 describes in more details the UE masking module represented in Fig. 3. The UE identifier $X_{ue}$, coded over 10 bits, is subjected to a (32,10) block error coding. The first 8 bits of the coded identifier are repeated and appended to the latter in the module denoted RP. The rate matched output $R_1$ is then *XOR*ed with the output of RP to output a UE masked output $S_1$.

According to the current version of the HSDPA specification, when a transmission for a given user ceases, the UE detects an error on the HS-SCCH channel. This situation has been illustrated in Fig. 2 at TTI $s_6$. It is assumed that the transmission for the UE in question has ended at $s_5$ and that sub-frame 260 is allocated to another user. The sub-frame 260 is therefore detected as erroneous since the UE identifier $X_{ue}$ encoded therein is not the identifier of the user. A negative acknowledgement NACK is transmitted over the HS-DPCCH channel accordingly. However, at this stage the UE cannot know whether the error is due to a defective transmission or a change of assignment. The UE therefore returns to the monitoring state at the next TTI (here at $s_7$) and checks whether a sub-frame is assigned to the user on one of HS-SSCH channel. Since monitoring entails decoding and CRC calculation, this can lead to a significant increase of processing load and power consumption, especially when the transmission conditions are poor.

An object of the invention is to propose a method for transmitting and for receiving sequences of sub-frames assigned to different users over a plurality of shared channels which avoids to monitor all the shared channels when a transmission error has occurred in a sub-frame.

The invention is defined as a method for transmitting sequences of sub-frames assigned to different users over a plurality of shared channels as defined in claim 1. Advantageous embodiments of this method are defined in the claims depending thereupon.

The invention is also defined by a method for receiving sequences of sub-frames assigned to different users over a plurality of shared channels as defined in claims 14 to 19.

The characteristics of the invention mentioned above, as well as others, will emerge more clearly from a reading of the following description in relation to the accompanying figures, amongst which:

Fig. 1 depicts schematically the physical structure of a downlink shared channel for HSDPA;

Fig. 2 depicts schematically the process carried out by a user equipment for receiving data from a plurality of downlink shared channels;

Fig. 3 depicts schematically a known process for generating a signalling sub-frame on an HS-SCCH channel;

Fig. 4 represents a format of encoded signalling information at a predetermined stage of the process illustrated in Fig. 3;

Fig. 5 depicts schematically an operation involved in the sub-frame generating process of Fig. 3;

Fig. 6 represents schematically a process for generating a signalling sub-frame used in the method for transmitting sequences of sub-frames according to a first embodiment of the invention;

Fig. 7 represents schematically a process for generating a signalling sub-frame used in the method for transmitting sequences of sub-frames according to a second embodiment of the invention;

Fig. 8 represents schematically a process for generating a signalling sub-frame used in the method for transmitting sequences of sub-frames according to a third embodiment of the invention;

Fig. 9A represents schematically a first example of a process for generating a signalling sub-frame according to Fig. 7;

Fig. 9B represents schematically a second example of a process for generating a signalling sub-frame according to Fig. 7;

Fig. 10A represents schematically a first example of a process for generating a signalling sub-frame according to Fig. 8;

Fig. 10B represents schematically a second example of a process for generating a signalling sub-frame according to Fig. 8;

Fig. 10C represents schematically a third example of a process for generating a signalling sub-frame according to Fig. 8;

Fig. 11 represents the of an ending pattern used in the process illustrated in Fig. 6;

Fig. 12A represents the format of an encoded signalling information at a predetermined stage of the process illustrated in Fig. 9A;

Fig. 12B represents the format of an encoded signalling information at a predetermined stage of the process illustrated in Fig. 9B;

Fig. 13A represents a format of encoded signalling information at a predetermined stage of the process illustrated in Fig. 10A;

Fig. 13B represents a format of encoded signalling information at a predetermined stage of the process illustrated in Fig. 10B;

Fig. 13C represents a format of encoded signalling information at a predetermined stage of the process illustrated in Fig. 10C;

Fig. 14 depicts schematically a method for receiving sequences of sub-frames from a plurality of shared channels according to a first embodiment of the invention;

Fig. 15 depicts schematically a method for receiving sequences of sub-frames from a plurality of shared channels according to a second and third embodiments of the invention;

Fig. 16 depicts schematically a method for receiving sequences of sub-frames from a plurality of shared channels according to a variant of the invention.

We refer back to a telecommunication having an HSDPA functionality and more specifically to the transmission of sequences of sub-frames assigned to different users over a plurality of shared channels.

The basic idea underlying the invention is to introduce in each sequence of sub-frames assigned to a user an information indicating the end of the sequence. This information can be incorporated in the last sub-frame of said sequence or appended thereto. By so doing, the transmitter delimits consecutive sequences assigned to different users over a shared channel. At the receiving side, if the UE detects an erroneous sub-frame, it can determine from said information whether the error is due to a transmission error or a change of assignment.

Various embodiments of the invention are described hereafter, corresponding to different methods for generating the signalling sub-frame carrying the end of sequence information.

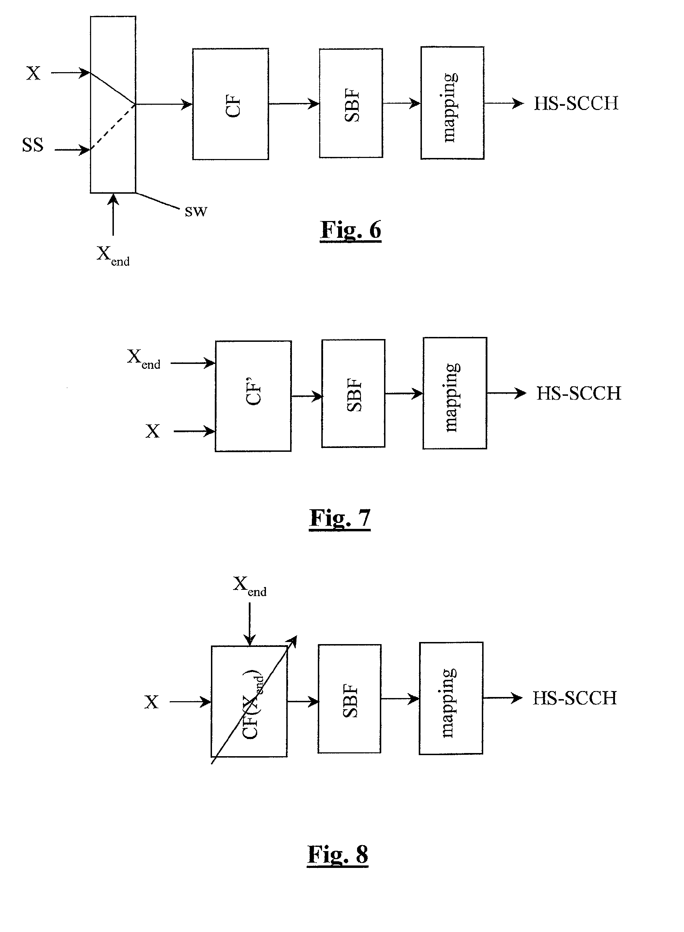

According to a first embodiment of the invention there is used a method for generating signalling sub-frames as illustrated in Fig. 6.

A switch sw applies either the user specific signalling information X or a predetermined binary pattern SS (of same size as X) to a coder having a coding function CF. The switch is controlled by a binary variable $X_{end}$ taking a first binary value when the sub-frame is the last of the sequence assigned to a user and a second binary value in the opposite case. When $X_{end}$ takes said first (resp. second) binary value, the predetermined binary pattern (resp. the user specific signalling information X) is coded by CF.

The user specific signalling information typically comprises the UE identifier $X_{ue}$ and the transmission parameters $X_{ccs}$, $X_{ms}$, $X_{tbs}$, $X_{hap}$, $X_{rv}$, $X_{nd}$ as described in relation with Fig. 3. The predetermined binary pattern SS is preferably a constant of the system.

Preferably, the output of the coder is further channel encoded and rate matched in a module SBF before being mapped onto a shared channel, as an HS-SCCH channel in HSDPA.

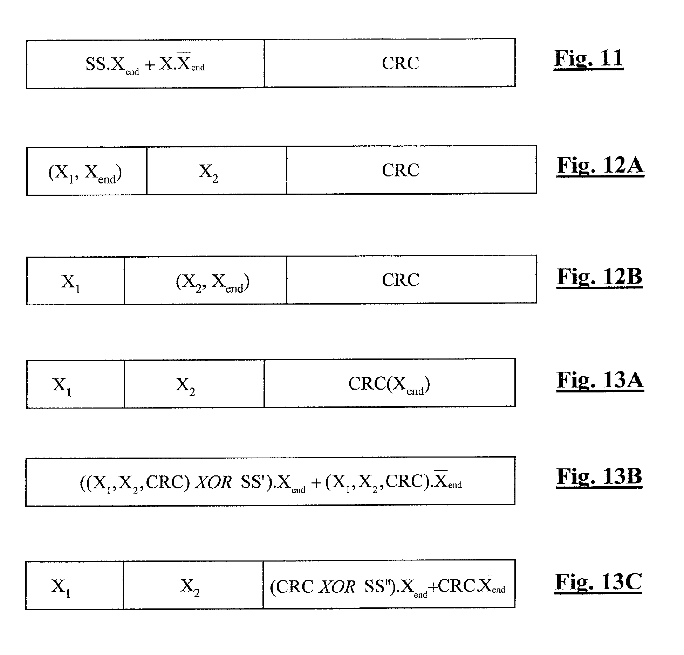

It is important to note that the coding function is specific to the user. Preferably, the coding function CF comprises a CRC code calculation with $X_{ue}$ as illustrated in Fig. 3. In such instance, the encoded signalling information input to the functional module SBF comprises a first part equal to $SS.X_{end} + X.\bar{X}_{end}$ and a second part to the CRC code as represented in Fig. 11.

According to a second embodiment of the invention there is used a method for generating signalling sub-frames as illustrated in Fig. 7.

The user specific signalling information X and the binary variable $X_{end}$ are together subjected to a coding function CF' and the encoded information $CF'(X, X_{end})$ is preferably channel encoded and rate matched in SBF before being mapped onto a shared channel as an HS-SCCH channel in HSDPA. The coding function CF' preferably comprises a CRC code calculation with $X_{ue}$.

According to a third embodiment, to the invention there is used a process for generating signalling sub-frames as illustrated in Fig. 8.

The user specific signalling information X is subjected to a coding function $CF(X_{end})$ depending upon the binary variable $X_{end}$. The encoded signalling information $CF(X_{end})(X)$ is preferably channel encoded and rate matched in SBF before being mapped onto a shared channel as an HS-SCCH channel in HSDPA.

Although the coding function $CF(X_{end})$ may have various forms, it has to take distinct set of values for opposite values of $X_{end}$ so that $X_{end}$ can be unambiguously identified at the receiving side, whatever X. The coding function CF $(X_{end})$ is specific to the user and preferably comprises a CRC code calculation with $X_{ue}$.

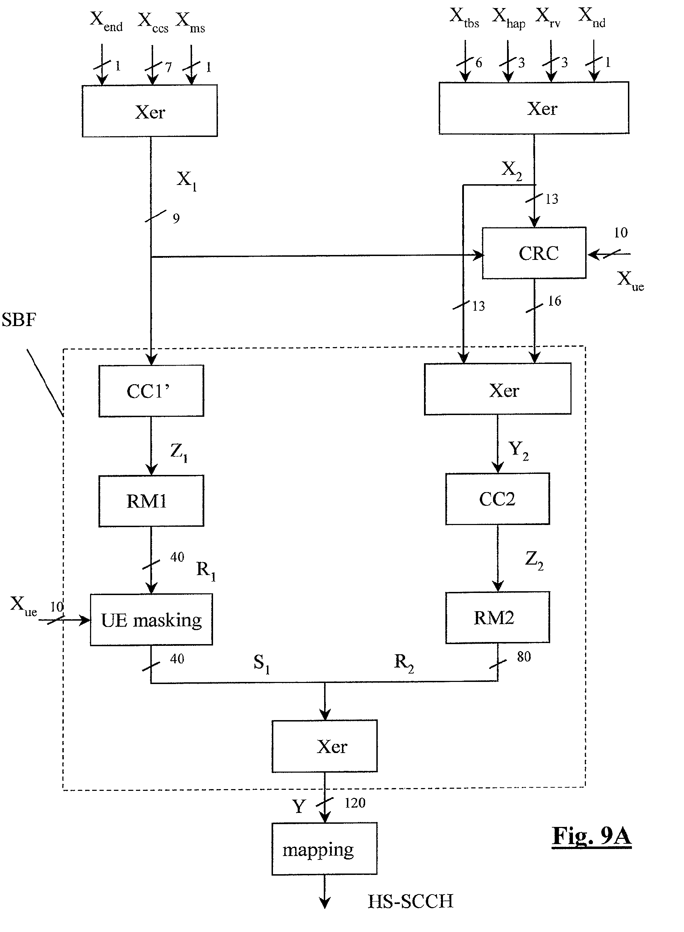

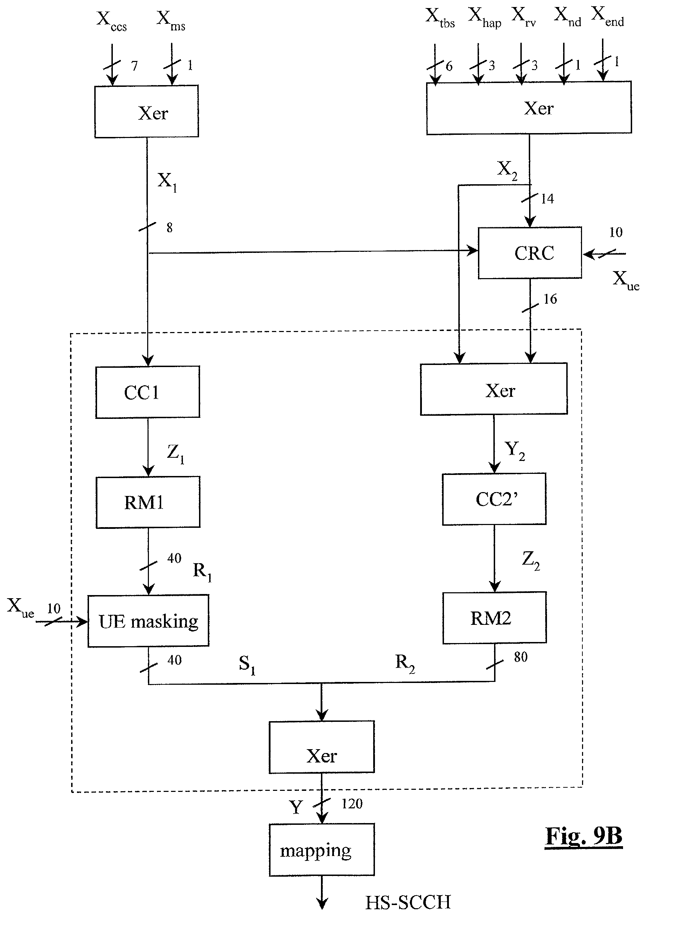

Figs. 9A and 9B illustrate two examples of the sub-frame generating method of Fig. 7.

In the example represented in Fig. 9A, the binary variable $X_{end}$ is appended as suffix to the first composite signalling information $X_1$, while the second composite signalling information $X_2$ is left unchanged. The CRC code is calculated on the basis of $(X_1, X_{end})$, $X_2$ and $X_{ue}$ where $(X_1, X_{end})$ stands for the concatenation of $X_1$ and $X_{end}$. The functional modules illustrated in SBF are identical to those of Fig. 3 except the channel coding CC1' which operates on 9 bits instead of 8 bits.

The format of the encoded signalling information $CF'(X, X_{end})$ is shown in Fig. 12A. It comprises a first field $(X_1, X_{end})$ of 9 bits, a second field $X_2$ of 13 bits and a CRC code of 16 bits.

It should be noted that instead of appending $X_{end}$ as a suffix to $X_1$, it could be alternatively appended as a prefix or inserted into $X_1$ at a given bit location. In a variant, the $X_{end}$ could be appended to $X_1$ or inserted into $X_1$ without being taken into account in the CRC code calculation.

In the example represented in Fig. 9B, the binary variable $X_{end}$ is appended as a suffix to the second composite signalling information $X_2$, while the first composite signalling information $X_1$ is left unchanged. The CRC code calculation is performed on the basis of $(X2, X_{end})$ and $X_{ue}$ where $(X2, X_{end})$ stands for the concatenation of $X2$ and $X_{end}$. The functional modules illustrated in SBF are identical to those of Fig. 3 except the channel coder CC2' which now operates on 30 bits instead of 29.

The format of the signalling information $CF'(X,X_{end})$ at the input of the functional module SBF is shown in Fig. 12B. It comprises a first field $X_1$ of 8 bits, a second field $(X2, X_{end})$ of 14 bits and a CRC code of 16 bits, obtained from $X_1$, $(X2, X_{end})$ and $X_{ue}$.

It should be noted that instead of appending $X_{end}$ as a suffix to $X_2$, it could alternatively be appended as a prefix or inserted into $X_2$ at a given bit location. In a variant, $X_{end}$ could be appended to $X_2$ or inserted into $X_2$ without being taken into account in the CRC code calculation.

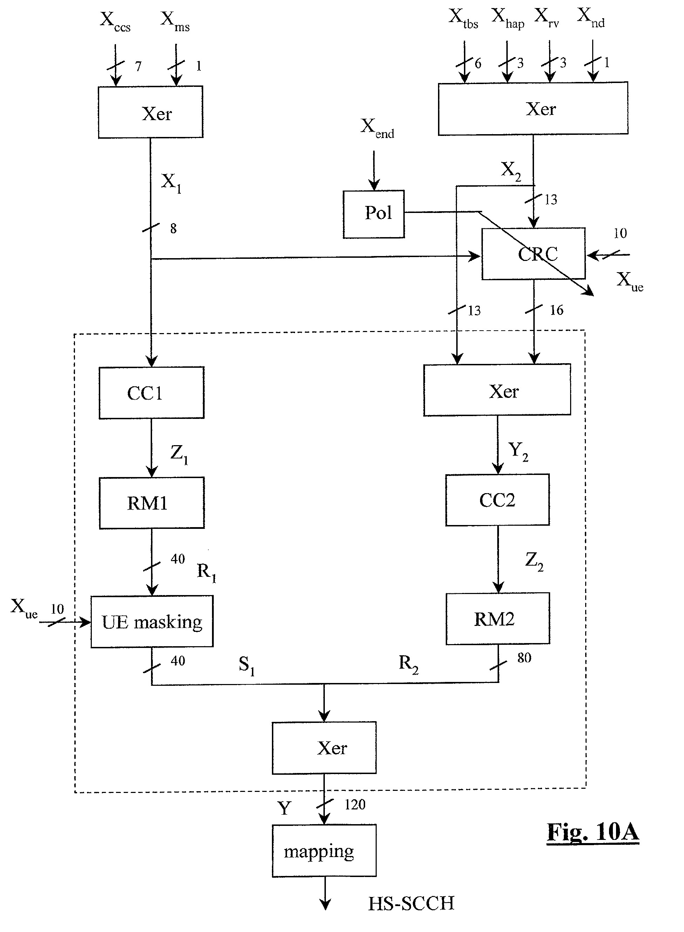

Figs. 10A to 10C illustrate examples of the sub-frame generating process of Fig. 8 with different coding functions $CF(X_{end})$.

In the example of Fig. 10A, both first and second composite signalling information $X_1$ and $X_2$ are left unchanged by the coding function. The role of the coding function is performed here by the CRC code calculation: when $X_{end}$ takes a first binary value, e.g. indicates a last sub-frame, the CRC code is calculated according to a first polynomial and when it takes a second binary value, the CRC code is calculated according to a second polynomial.

The format of the encoded signalling information $CF(X_{end})(X)$ is shown in Fig. 13A. It comprises a first field $X_1$ of 8 bits, a second field $X_2$ of 13 bits and a CRC code $CRC(X_{end})$ obtained from $X_1, X_2$ and $X_{ue}$. Preferably, the polynomials are chosen so that $CRC(X_{end})$ is a 16 bit-word and the modules of SBF are identical to those of Fig. 3.

At the receiving side, the UE performs a cyclic redundancy check according to the first polynomial and a cyclic redundancy check according to the second polynomial. If the CRC according to the first polynomial is null, the current sub-frame is considered to be the last of the sequence and, similarly, if the CRC according to the second polynomial is null, the current sub-frame is considered as not being the last of the sequence. If both CRCs are not null, then a transmission error has occurred.

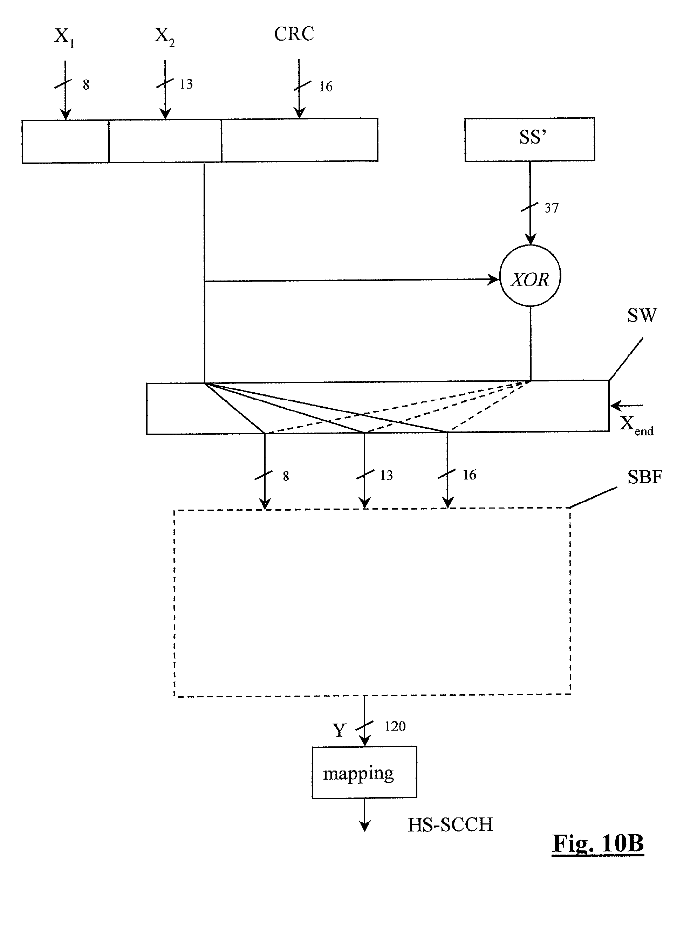

In the example of Fig. 10B, only a part of the sub-frame generating method has been represented for the sake of simplicity. The coding function consists here in calculating first the CRC code from $X_1$, $X_2$ and $X_{ue}$ as in Fig. 3 and then binary combining $(X_1, X_2, CRC)$ with a specific pattern SS'. Preferably, SS' is of same size as $(X_1, X_2, CRC)$, i.e. 37-bit and the combination operation is a *XOR* operation as shown. If $X_{end}$ indicates that the current sub-frame is not the last sub-frame (e.g. $X_{end}=0$) the signalling information $(X_1,X_2,CRC)$ is switched by SW to the input of SBF. Conversely, if $X_{end}$ indicates a last sub-frame ($X_{end}=1$) the combination result is switched to the input of SBF. The format of encoded signalling information $CF(X_{end})(X)$ at the input of the functional module SBF is represented in Fig. 13B. The coding operation $CF(X_{end})$ can be expressed as:

$$CF(X_{end})\,(X)=((X_1,X_2,CRC)\ XOR\ SS').X_{end}+(X_1,X_2,CRC).\bar{X}_{end}.$$

Advantageously, the ending pattern SS' is an all "1s" word, therefore causing the bits of the signalling information $(X_1,X_2,CRC)$ to be inverted by the *XOR* operation. Hence, at the receiving side, the UE can easily determine whether the current sub-frame is the last of a sequence. If the result of the cyclic redundancy check is all "1s", it indicates a last sub-frame. Conversely, if it is all "0s", it indicates that the current sub-frame is not the end of the sequence. Finally, if it is different from all "0s" and all "1s", it indicates that the sub-frame is assigned to another UE or that a transmission error has occurred.

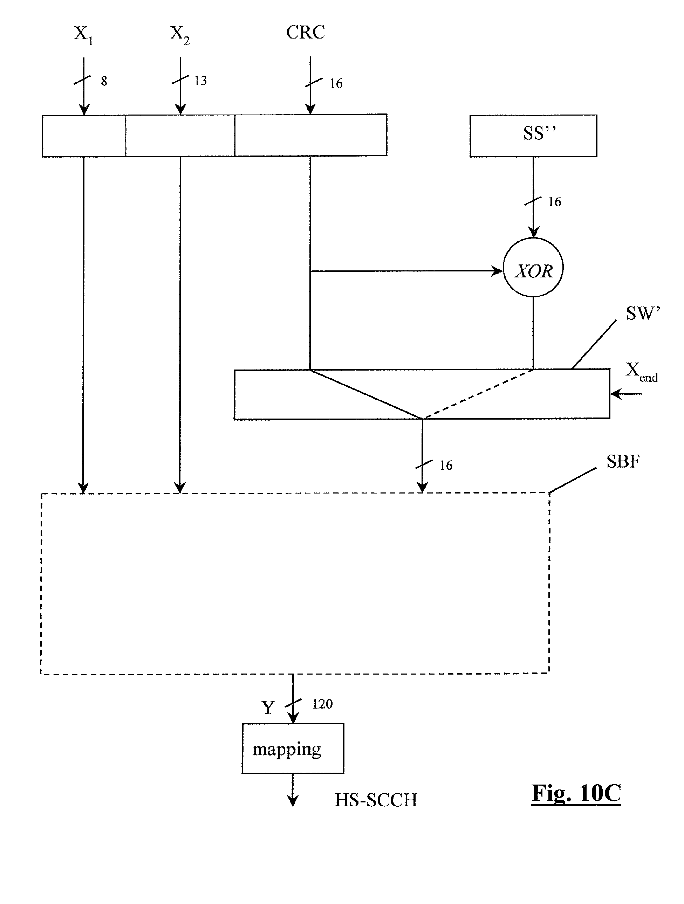

In the example of Fig. 10C, again a part of the sub-frame generating method has been represented. The coding function consists here in calculating first the CRC code from $X_1$, $X_2$ and $X_{ue}$ as in Fig. 3 and then binary combining said CRC code with a specific ending pattern SS". Preferably, SS" is chosen of same size as the CRC code, i.e. 16 bit and the combination operation is a *XOR* operation as shown.

If $X_{end}$ indicates that the current sub-frame is not the last sub-frame ($X_{end}=0$) the CRC code is switched by SW' to the corresponding input of SBF. Conversely, if $X_{end}$ indicates a last sub-frame ($X_{end}=1$) the combination result is switched to said input.

The format of encoded signalling information at the input of the functional module SBF is represented in Fig. 13C. The coding operation CF($X_{end}$) can be expressed as :

$$CF(X_{end})(X)=(X_1, X_2, (CRC \; XOR \; SS").X_{end}+CRC.\bar{X}_{end}).$$

Advantageously, the ending pattern SS" is an all "1s" word, therefore causing the bits of CRC code to be inverted by the *XOR* operation. At the receiving side, the UE can easily determine whether the current sub-frame is the last of a sequence. If the result of the cyclic redundancy check is all "1s", it indicates a last sub-frame. Conversely, if it is all "0s", it indicates that the current sub-frame is not the last of the sequence. Finally, if it is different from all "0s" and all "1s", it indicates that the current sub-frame is assigned to another UE or that a transmission error has occurred.

It is important to note that, in contrast to the first embodiment, the second and third embodiments do not necessitate to transmit a supplementary sub-frame after the sequence. The indication of the end of the sequence is directly carried by the last sub-frame without requiring additional transmission resources.

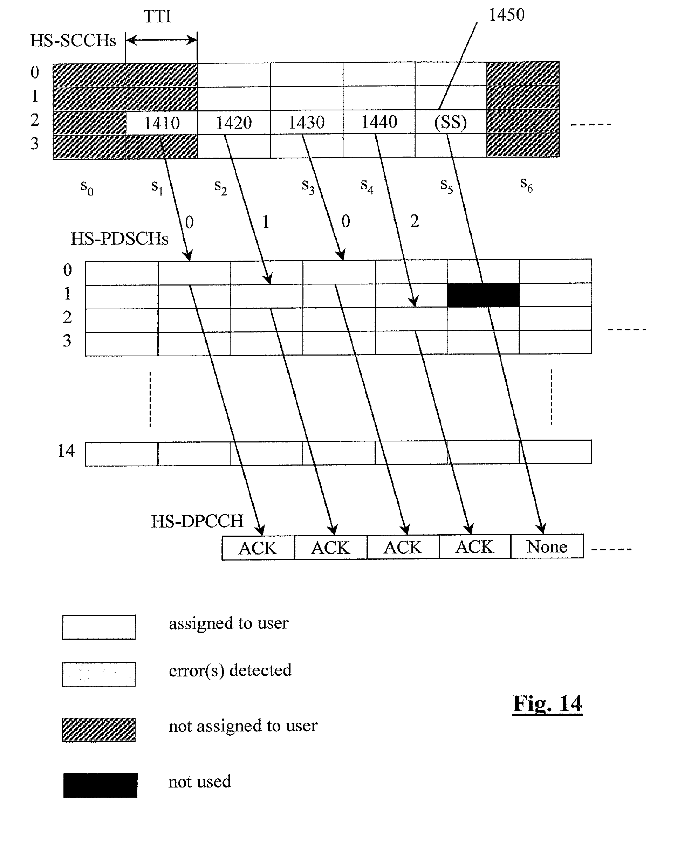

Fig. 14 illustrates a method for receiving data from a shared channel, according to the first embodiment of the invention. It is assumed that the signalling sub-frames over the channels HS-SCCHs have been generated by the method illustrated in Fig. 6.

When the UE is in monitoring state, it receives the sub-frames on the HS-SCCH channels #0 to #3 (see TTI $s_0$) and checks, after UE ID descrambling, whether the sub-frames are erroneous or not. When an error-free sub-frame is detected on a given channel HS-SCCH, it stops receiving the other channels. In the example represented, the UE detects at TTI $s_1$ the presence of an error-free sub-frame 1410 on channel HS-SCCH #2 and consequently stops receiving the other channels at TTI $s_2$. After having decoded a signalling sub-frame, the UE knows from which HS-PDSCH channel(s) the data sub-frame is to be retrieved and which transmission parameters have been used. If the retrieved data does not contain any error, an acknowledgment is sent over the uplink HS-DPCCH channel.

When the UE receives an error-free sub-frame, it compares the signalling information encoded therein with the specific binary pattern SS (e.g. by a *XOR* operation). If said signalling information is identical to the specific bit pattern SS (like in sub-frame 1450) no data are retrieved from the physical PDSCH channels and no acknowledgement is sent back to the node B over the uplink HS-DPCCH channel. The UE returns then to the monitoring state at the next TTI ($s_6$).

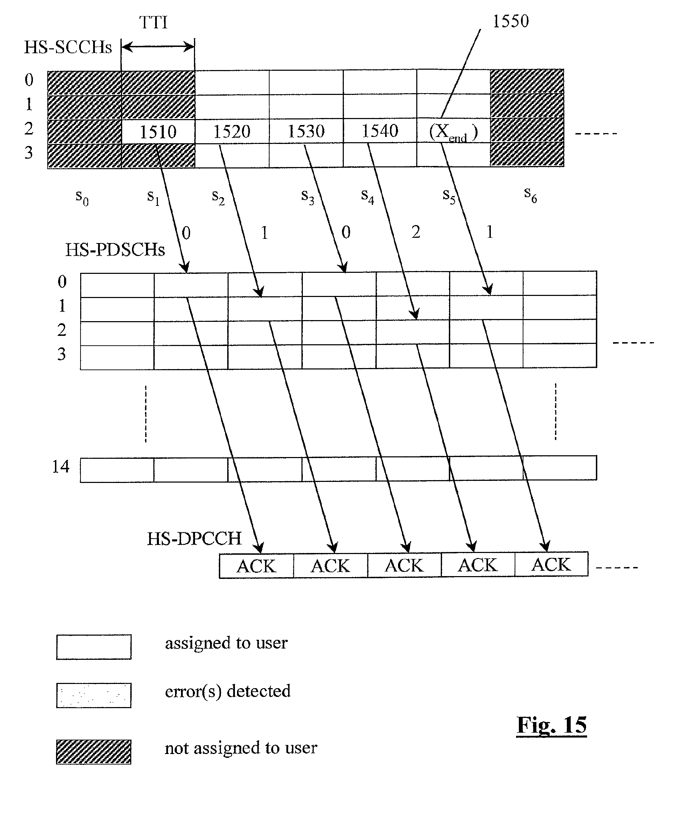

Fig. 15 illustrates a method for receiving data from a shared channel, according to the second or third embodiment of the invention. It is assumed that the signalling sub-frames over the channels HS-SCCHs have been generated by one of the methods illustrated in Figs. 9,9A,9B or 10,10A,10B,10C.

The receiving method of Fig. 15 differs from the one of Fig. 14 when an erroneous sub-frame (e.g. sub-frame 1550) is detected.

If the signalling sub-frames have been generated according to Fig. 9 , 9A or 9B, then the binary variable $X_{end}$ is read after an operation inverse to SBF has been performed. The UE knows therefore directly whether the current sub-frame is the last of the sequence.

If the signalling sub-frames have been generated according to Fig. 10, 10A, 10B or 10C, it is attempted to decode the erroneous sub-frame with the code function CF($X_{end}=1$) instead of CF($X_{end}=0$). Advantageously, in some cases as in Figs. 10B and 10C where SS' and SS" are all "1s", the second decoding result can be directly derived from the first. If the second decoding result is error free, the current sub-frame is the last of the sequence ($X_{end}=1$).

In both cases, whether $X_{end}=0$ or 1, the UE knows after decoding from which HS-PDSCH channel(s) the data sub-frame has to be retrieved and which transmission parameters have been used. If the retrieved data does not contain any error, an acknowledgement ACK is sent back to the node B over the uplink channel HS-DPCCH.

If $X_{end}=1$, then the UE returns to the monitoring process at the next TTI ($s_6$).

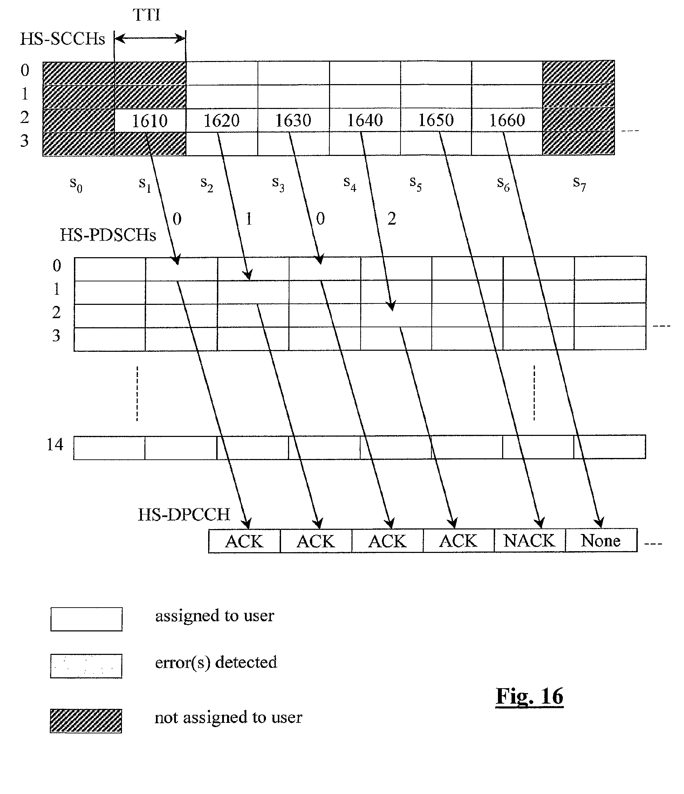

In the receiving method of Fig. 14 or 15, a problem arises when the sub-frame carrying the information of end of sequence is affected by a transmission error. In such instance, the end of sequence may be missed and all the sub-frames of the subsequent sequence will be considered erroneous. The receiving method illustrated in Fig. 16 addresses this problem.

In Fig. 16, if the UE detects an erroneous sub-frame like 1650 it keeps receiving the same channel at the next TTI. If the next sub-frame 1660 is erroneous, the UE considers that this is due to a change of assignment, i.e. that the last sub-frame of the sequence has been missed in 1650. In other terms, when two consecutive erroneous sub-frames are detected on the same HS-SCCH channel, the UE decides that the end of the transmission has already been reached and consequently returns to the monitoring state at the next TTI (here TTI $s_7$). This implies however that a gap of one TTI has to be provided between consecutive assignments to the same user at the transmitting side, so that the UE does not miss the first sub-frame of a new sequence. For example, if the transmission to the user has ended in 1650, none of the HS-SCCH channels can be allocated to said user in next TTI $s_6$.

When the UE detects an error-free sub-frame like 1610, 1620, 1630 or 1640, it sends back to the node B a positive acknowledgement indication over the uplink channel HS-DPCCH. Conversely, when the UE detects an erroneous sub-frame it sends back a negative acknowledgement NACK on the same channel.

After the end of a sequence assigned to the user has been reached, NACKs are transmitted at each TTI on channel HS-DPCCH if no other HS-SCCH channel is assigned thereto. The number of NACKs that are sent back to the node B may be high if the transmission is suspended or interrupted, thus increasing the traffic on the HS-DPCCH channel.

Advantageously, when a first erroneous sub-frame has been detected and a first NACK transmitted accordingly, a further NACK is not transmitted back to the node B if the next sub-frame is found erroneous or if the subsequent sub-frames are found erroneous. For example, in Fig. 16, after having received a first erroneous sub-frame 1650, the UE does not send back a second NACK upon receiving a second erroneous sub-frame 1660. More generally, when the UE finds that a received sub-frame is erroneous, a NACK is sent back to node B if the previous sub-frame on the same HS-SCCH was not found erroneous and no acknowledgement is sent back to node B if said previous sub-frame was also found erroneous.

## Claims

1.  Method for transmitting sequences of sub-frames assigned to different users over a plurality of channels (HS-SCCHs), each channel being shared among said users, said shared channels being time divided into intervals of transmission (TTIs), a sequence of sub-frames assigned to a user being transmitted on a shared channel in consecutive intervals of transmission, **characterised in that** an information indicating the end of a sequence assigned to a user is included in the last sub-frame of said sequence or in a sub-frame appended thereto.

2.  Method for transmitting sequences of sub-frames assigned to different users over a plurality of channels according to claim 1, **characterised in that** a sub-frame carrying a specific binary pattern (SS) indicating the end of a sequence and encoded by a predetermined coding function (CF) specific to the user, is appended to the last sub-frame of a sequence assigned to said user.

3.  Method for transmitting sequences of sub-frames assigned to different users over a plurality of channels according to claim 2, **characterised in that** said predetermined coding function comprises the calculation of a CRC code on said specific binary pattern and an identifier of the user (UE ID).

4.  Method for transmitting sequences of sub-frames assigned to different users over a plurality of channels according to claim 1, **characterised in that** a sub-frame of a sequence assigned to a user is obtained by applying a predetermined coding function (CF') to a user specific signalling information (X) and a binary variable ($X_{end}$) indicating whether said sub-frame is the last of said sequence.

5.  Method for transmitting sequences of sub-frames assigned to different users over a plurality of channels according to claim 4, **characterised in that**, said user specific signalling information being constituted of a first part ($X_1$) followed by a second part ($X_2$), said binary variable is inserted or appended to said first part while said second part is left unchanged, before said coding function is applied.

6.  Method for transmitting sequences of sub-frames assigned to different users over a plurality of channels according to claim 4, **characterised in that**, said user specific signalling information being constituted of a first part ($X_1$) followed by a second part ($X_2$), said binary variable is inserted or appended to said second part while said first part is left unchanged, before said coding function is applied.

7.  Method for transmitting sequences of sub-frames assigned to different users over a plurality of channels according to claim 5 or 6, **characterised in that** said coding function comprises the calculation of a CRC code on said first and/ or second part and on an identifier of the user (UE ID).

8.  Method for transmitting sequences of sub-frames assigned to different users over a plurality of channels according to claim 1, **characterised in that** a sub-frame of a sequence assigned to a user is obtained by applying a coding function ($CF(X_{end})$) to a user specific signalling information (X), said coding function depending upon a binary variable ($X_{end}$) indicating whether said sub-frame is the last of said sequence.

9. Method for transmitting sequences of sub-frames assigned to different users over a plurality of channels according to claim 8, **characterised in that** said user specific signalling information being constituted of a first part ($X_1$) followed by a second part ($X_2$), said coding function comprises the calculation of a CRC code on said first and/ or second part and on an identifier of the user (UE ID), said CRC code being calculated according to a first polynomial when said binary variable takes a first binary value indicating a last sub-frame and according to a second polynomial when said binary takes the opposite binary value.

10. Method for transmitting sequences of sub-frames assigned to different users over a plurality of channels according to claim 8, **characterised in that** said coding function comprises the calculation of a CRC code on said user specific signalling information and on an identifier of the user (UE ID), the user specific signalling information and the CRC code attached thereto being further subjected to a logical operation with a specific binary pattern (SS') when said binary variable takes a first binary value indicating a last sub-frame and left unchanged when said binary variables takes the opposite binary value.

11. Method for transmitting sequences of sub-frames assigned to different users over a plurality of channels according to claim 10, **characterised in that** said logical operation is a XOR and said specific binary pattern is constituted of "1s".

12. Method for transmitting sequences of sub-frames assigned to different users over a plurality of channels according to claim 8, **characterised in that** said coding function comprises the calculation of a CRC code on said user specific signalling information and on an identifier of the user (UE ID), said CRC code being further subjected to a logical operation with a specific binary pattern (SS") when said binary variable takes a first binary value and left unchanged when said binary variables takes a second binary value, said user specific signalling information being left unchanged in both cases.

13. Method for transmitting sequences of sub-frames assigned to different users over a plurality of channels according to claim 12, **characterised in that** said logical operation is a XOR and said specific binary pattern is constituted of "1s".

14. Method for transmitting sequences of sub-frames assigned to different users over a plurality of channels according to any of claims 4 to 13, **characterised in that** the user specific signalling information encoded by said coding function is further subjected to a channel coding and rate matching operation (SBF) before being mapped onto said shared channel.

15. Method for receiving sequences of sub-frames assigned to different users over a plurality of channels (HS-SCCHs), each channel being shared among said users, said shared channels being time divided into intervals of transmission (TTIs), the sequences of sub-frames having been transmitted on said shared channels according to a method according to claim 2 or 3, **characterised in that** the sub-frames of a sequence assigned to a user are received from a single shared channel as long as no error is detected in said sub-frames, and that, if a sub-frame carries said specific binary pattern, the sub-frames respectively transmitted over said plurality of shared channels are all received by said user in the next interval of transmission.

16. Method for receiving sequences of sub-frames assigned to different users over a plurality of channels (HS-SCCHs), each channel being shared among said users, said shared channels being time divided into intervals of transmission (TTIs), the sequences of sub-frames having been transmitted on said shared channels according to a method according to any of claims 4 to 7, **characterised in that** the sub-frames of a sequence assigned to a user are received from a single shared channel as long as no error is detected in said sub-frames, and that, if a sub-frame transmitted in an interval of transmission is erroneous, the value of said binary variable is checked to determine whether said sub-frame is the last of the sequence, and, in the affirmative, the sub-frames respectively transmitted over said plurality of shared channels in the next interval of transmission are all received by said user.

17. Method for receiving sequences of sub-frames assigned to different users over a plurality of channels (HS-SCCHs), each channel being shared among said users, said shared channels being time divided into intervals of transmission (TTIs), the sequences of sub-frames having been transmitted on said shared channels according to a method according to claim 9, **characterised in that** the sub-frames of a sequence assigned to a user are received from a single shared channel as long as no error is detected from a CRC according to said second polynomial and that, if an error is detected, a new CRC according to said first polynomial is calculated, the sub-frames respectively transmitted over said plurality of shared channels in the next interval of transmission being all received by said user if no error is detected from said new CRC.

18. Method for receiving sequences of sub-frames assigned to different users over a plurality of channels (HS-SCCHs), each channel being shared among said users, said shared channels being time divided into intervals of transmission (TTIs), the sequences of sub-frames having been transmitted on said shared channels according to a method according to claim 11 or 13, **characterised in that** sub-frames are received from a single shared channel as long as said CRC is null, the sub-frames respectively transmitted over said plurality of shared channels in the next interval of transmission being all received by said user if said CRC is constituted of "1s".

19. Method for receiving sequences assigned to different users over a plurality of channels according to any of claims 15 to 18, **characterised in that**, if a first sub-frame followed by a second sub-frame on the same shared channel are found erroneous by a user, the sub-frames respectively transmitted over said plurality of shared channels in the interval of transmission following the one during which the second sub-frame has been transmitted, are all received by said user.

20. Method for receiving sequences assigned to different users over a plurality of channels according to any of claims 15 to 19, **characterised in that**, when a sub-frame on a shared channel is found erroneous by a user, a negative acknowledgement is sent on a feedback channel if the sub-frame preceding said erroneous sub-frame on said shared channel was not found erroneous, and no acknowledgement is sent on said feedback channel if said preceding sub-frame was also found erroneous.

**Node B**                                                                    **UE**

signalling channels

HS-SCCH #0

HS-SCCH #1

HS-SCCH #2

HS-SCCH #3

data channels

HS-PDSCH #0

HS-PDSCH #1

HS-PDSCH #14

## Fig. 1

Fig. 2

$X_{ccs}$  $X_{ms}$          $X_{tbs}$  $X_{hap}$  $X_{rv}$  $X_{nd}$

7  1          6  3  3  1

Xer          Xer

$X_1$          $X_2$

CF          13

8          CRC          10

$X_{ue}$

16

SBF

CC1          Xer

$Z_1$          $Y_2$

RM1          CC2

40  $R_1$          $Z_2$

$X_{ue}$  10          RM2

UE masking

40  $S_1$          $R_2$          80

Xer

Y  120

mapping

HS-SCCH

**Fig. 3**

| $X_1$ | $X_2$ | CRC |
|-------|-------|-----|

**Fig. 4**

**Fig. 5**

$R_1$ ──40── $XOR$ ──40── $S_1$

↑ 40

RP

↑ 32

BC (32,10)

↑ $X_{ue}$

10

X →

SS →

$X_{end}$ →↑ ← sw

→ CF → SBF → mapping → HS-SCCH

**Fig. 6**

$X_{end}$ →

X →

CF' → SBF → mapping → HS-SCCH

**Fig. 7**

$X_{end}$ ↓

X →

CF($X_{end}$) → SBF → mapping → HS-SCCH

**Fig. 8**

**Fig. 9A**

**Fig. 9B**

**Fig. 10A**

$X_1$ $X_2$ CRC

8 13 16

SS'

37

XOR

SW

$X_{end}$

8 13 16

SBF

Y 120

mapping

HS-SCCH

**Fig. 10B**

Fig. 10C

| $SS.X_{end} + X.\overline{X}_{end}$ | CRC | **<u>Fig. 11</u>** |
|---|---|---|

| $(X_1, X_{end})$ | $X_2$ | CRC | **<u>Fig. 12A</u>** |
|---|---|---|---|

| $X_1$ | $(X_2, X_{end})$ | CRC | **<u>Fig. 12B</u>** |
|---|---|---|---|

| $X_1$ | $X_2$ | $CRC(X_{end})$ | **<u>Fig. 13A</u>** |
|---|---|---|---|

| $((X_1, X_2, CRC)\ XOR\ SS').X_{end} + (X_1, X_2, CRC).\overline{X}_{end}$ | **<u>Fig. 13B</u>** |
|---|---|

| $X_1$ | $X_2$ | $(CRC\ XOR\ SS'').X_{end} + CRC.\overline{X}_{end}$ | **<u>Fig. 13C</u>** |
|---|---|---|---|

Fig. 14

assigned to user

error(s) detected

not assigned to user

not used

**Fig. 15**

**Fig. 16**

**European Patent Office**

## EUROPEAN SEARCH REPORT

Application Number

EP 02 29 0873

### DOCUMENTS CONSIDERED TO BE RELEVANT

| Category | Citation of document with indication, where appropriate, of relevant passages | Relevant to claim | CLASSIFICATION OF THE APPLICATION (Int.Cl.7) |
|---|---|---|---|
| X | US 5 710 756 A (BEN-EFRAIM GIDEON ET AL) 20 January 1998 (1998-01-20) * column 6, line 57 - line 62 * * column 8, line 9 - line 11 * | 1-4,8, 15,16,18 | H04L1/00 |
| Y | * column 8, line 27 - line 33 * * column 8, line 54 - column 9, line 21 * * column 9, line 29 - line 31 * * column 9, line 51 - line 67 * * column 10, line 10 - line 29 * * column 10, line 37 - line 55; figures 6,7,9,10 * | 20 | |
| Y | US 5 754 564 A (FRANCIS JAMES COVOSSO) 19 May 1998 (1998-05-19) * column 1, line 19 - line 27 * | 20 | |
| A | * column 2, line 41 - line 50 * * column 3, line 26 - line 38 * * claim 1 * | 1,15-18 | |
| A | US 5 355 379 A (GOLD MARTIN P ET AL) 11 October 1994 (1994-10-11) * column 4, line 52 - line 64 * * column 5, line 49 - line 67; figure 3 * | 1,15-18 | TECHNICAL FIELDS SEARCHED (Int.Cl.7) H04L H03M |
| A | EP 0 629 060 A (INMOS LTD) 14 December 1994 (1994-12-14) * column 1, line 11 - line 19 * * column 4, line 34 - line 43 * * column 5, line 30 - line 32 * | 1,15-18 | |
| A | EP 0 473 102 A (HONEYWELL INC) 4 March 1992 (1992-03-04) * column 5, line 53 - column 6, line 16 * * column 8, line 10 - line 27 * * column 11, line 32 - line 49 * | 1,15-18 | |

The present search report has been drawn up for all claims

| Place of search | Date of completion of the search | Examiner |
|---|---|---|
| THE HAGUE | 1 October 2002 | Papantoniou, A |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

**EP 1 353 467 A1**

## ANNEX TO THE EUROPEAN SEARCH REPORT
## ON EUROPEAN PATENT APPLICATION NO.

EP 02 29 0873

This annex lists the patent family members relating to the patent documents cited in the above-mentioned European search report.
The members are as contained in the European Patent Office EDP file on
The European Patent Office is in no way liable for these particulars which are merely given for the purpose of information.

01-10-2002

| Patent document cited in search report | | Publication date | Patent family member(s) | | Publication date |
|---|---|---|---|---|---|
| US 5710756 | A | 20-01-1998 | US | 5648969 A | 15-07-1997 |
| | | | AU | 7246296 A | 28-04-1997 |
| | | | CA | 2206677 A1 | 10-04-1997 |
| | | | DE | 69618336 D1 | 07-02-2002 |
| | | | DE | 69618336 T2 | 14-08-2002 |
| | | | EP | 0795212 A1 | 17-09-1997 |
| | | | WO | 9713292 A1 | 10-04-1997 |
| | | | AU | 5169196 A | 04-09-1996 |
| | | | CA | 2212799 A1 | 22-08-1996 |
| | | | EP | 0809896 A1 | 03-12-1997 |
| | | | IL | 117118 A | 16-07-2000 |
| | | | JP | 11500283 T | 06-01-1999 |
| | | | WO | 9625806 A1 | 22-08-1996 |
| US 5754564 | A | 19-05-1998 | NONE | | |
| US 5355379 | A | 11-10-1994 | AT | 163327 T | 15-03-1998 |
| | | | CA | 2086941 A1 | 14-01-1992 |
| | | | DE | 69128935 D1 | 26-03-1998 |
| | | | DE | 69128935 T2 | 13-08-1998 |
| | | | EP | 0539473 A1 | 05-05-1993 |
| | | | WO | 9201252 A1 | 23-01-1992 |
| | | | HK | 1008894 A1 | 21-05-1999 |
| | | | JP | 6501346 T | 10-02-1994 |
| EP 0629060 | A | 14-12-1994 | DE | 69430085 D1 | 18-04-2002 |
| | | | EP | 0629060 A1 | 14-12-1994 |
| | | | JP | 2954486 B2 | 27-09-1999 |
| | | | JP | 7177132 A | 14-07-1995 |
| | | | US | 5553067 A | 03-09-1996 |
| EP 0473102 | A | 04-03-1992 | CA | 2050099 A1 | 01-03-1992 |
| | | | DE | 69114788 D1 | 04-01-1996 |
| | | | DE | 69114788 T2 | 11-07-1996 |
| | | | EP | 0473102 A2 | 04-03-1992 |
| | | | JP | 4358245 A | 11-12-1992 |
| | | | US | 5500864 A | 19-03-1996 |

For more details about this annex : see Official Journal of the European Patent Office, No. 12/82

25